# EUROPEAN PATENT SPECIFICATION

(11) **EP 0 977 401 B1**
(45) Date of publication and mention of the grant of the patent: **14.02.2007**
(21) Application number: 97907414.3
(22) Date of filing: 21.03.1997
(51) Int. Cl.: H04L 12/28, H04L 12/40, H04L 12/56

(54) **ELECTRONIC DEVICE, ELECTRONIC DEVICE USING METHOD, AND ELECTRONIC DEVICE SYSTEM**
ELEKTRONISCHE VORRICHTUNG , VERFAHREN ZUR VERWENDUNG DER VORRICHTUNG UND SYSTEM MIT DER VORRICHTUNG
DISPOSITIF ELECTRONIQUE, PROCEDE D'UTILISATION ET SYSTEME

(43) Date of publication of application: 02.02.2000
(73) Proprietor: Hitachi, Ltd., Chiyoda-ku, Tokyo 101 (JP)
(72) Inventor: FUKUSHIMA, Shinichiro, Totsuka-ku Yokohama-shi Kanagawa 244 (JP); NOZOE, Takahiko, Hitachi Hachimanyama Apt 142, Yokohama-shi Kanagawa 244 (JP); HASEGAWA, Tsukasa, Hiratsuka-shi Kanagawa 254 (JP); GOTO, Hidefumi, Yokosuka-shi Kanagawa 239 (JP)
(74) Representative: Hackney, Nigel John
(86) International application number: PCT/JP1997/000933
(87) International publication number: WO 1998/043391

(56) References cited:
- JP-A- 3 147 151
- JP-A- 4 346 598
- JP-A- 5 242 022
- JP-A- 6 244 842
- JP-A- 7 336 375
- JP-A- 8 125 670
- JP-A- 8 228 200
- JP-A- 9 027 814
- JP-A- 9 051 344
- US-A- 5 052 029
- US-A- 5 463 624
- NIKKEI ELECTRONICS, No. 612, 4 July 1994, SCOTT SMYERS, "Providing an Isochronous Transfer Function for Multimedia Data (in Japanese)", pp. 152-163. XP008053005
- TECHNICAL RESEARCH REPORT OF IEICE 96-DPS-74, Vol. 96, No. 12, INFORMATION PROCESSING SOC. OF JAPAN (IPSJ), 26 January 1996, MASANORI SUZUKI, TAKUYA FUJIMOTO, TOSHIHIRO KAGEYAMA, HIROYUKI KITAYAMA, TOSHIO KOIZUMI, "High-Speed Serial Bus (IEEE 1394) Communication Method for Video Conference System (in Japanese)", pp. 215-220.
- IEEE TRANSACTIONS ON CONSUMER ELECTRONICS, Volume 41, Number 3, IEEE Consumer Electronics Society, 31 August 1995, ADAM J. KUNZMAN, ALAN T. WETZEL, "1394 High Performance Serial Bus: The Digital Interface for ATV", pp. 893-900. XP000539552
- PHILLIPS JOURNAL OF RESEARCH, Vol. 50, No. 1/2, 29 July 1996, PHILLIPS JOURNAL, R.H.J. BLOKS, "The IEEE-1394 High Speed Serial Bus", pp. 209-216. XP000940724

## Description

### Technical Field

This invention relates to a technique for an electronic device system, such as Audio Visual device (hereinafter, "AV device") that dealing with visual information and audio information, and information processing device, connected by a communication bus. Especially, the technique relates to prevent from using the electronic device system that exceeds a transfer capacity of the communication bus.

### Background Art

For example, IEEE 1394 serial bus is thought as a network system that enables a transmission of data by isochronous communication and a transmission of a control signal by asynchronous communication between connected the AV device and the information processing device. The IEEE 1394 serial bus is standardized to "IEEE STD 1394-1995" as "IEEE STANDARD FOR A HIGH PERFORMANCE SERIAL BUS." As an example of using IEEE 1394 serial buses, Japanese published unexamined patent application No. H08-47058 is disclosed that "a method for selecting input devices" that can display only device that are able to output of an information signal as input available device in a system that connected a plurality of electronic devices by the communication bus.

Further, "AV/C Digital Interface Command Set", regarding a control signal to control the AV device for playback and record of AV data by using 1394 IEEE serial bus, is opened to the public by "1394 Trade Association".

However, in the technique like usual IEEE 1394, in case a plurality of electronic devices perform the described later isochronous communication simultaneously, further an available width and number of channels of the bus are exceeded, some of the electronic devices that the devices try to perform the communication can not use the bus because of the short of available width and number of channels of the bus.

It tries to think a case that in a network, for example, that connecting a digital receiver IRD (hereinafter "IRD") and a device like digital videotape recorder D-VTR (hereinafter "D-VTR"), a reserved recording is performed by the above-mentioned network. When the other electronic devices that connected the network use the bus during the reserved recording time, and the bus width that the IRD wants to use is larger than the available bus width at that time, the IRD cannot secure the bus width. As the result, the reserved recording is not performed because a data is not transmitted from the IRD to the D-VTR.

Further, in the input device selection method and AV/C Digital Interface Command Set, a method of selecting the input device in the present time, and a transmission method of the data and the control signal in the present time are only considered.

JP-08-023584 discloses an electronic equipment control system having a command processing part and a command processing execution part. The processing part constructs a connection parameter to the execution part and the execution part executes an inter-equipment connection in accordance with this parameter. The present invention provides an electronic device according to claim 1. In case in the electronic device system to which the AV device and information processing device were connected by the communication bus, a reserved playback and a reserved picture recording are performed, it inquires of the connected devices about each reservation information. Then, on the basis of answer information from the inquired devices, it judges how that can perform the reservation of a communication resource, the usage that exceeds the transfer capacity of the communication bus is prevented, and the reservation of the communication resource is performed.

Further, in this invention, in case a reservation or an immediate communication is impossible, the reason can be displayed. In addition, in case usage of a bus is prohibited because other devices have reserved the bus, the reason can be displayed.

### Disclosure of Invention

This invention relates to a system connecting, such as AV device, information processing device by a bus. In order to communicate reliable, a device that can perform reproducing in the system inquires of the connected device reservation information. Responsive to a response from the connected devices, the device has an element that can judge the availability of the bus transferring capacity not so as to excess the capacity of the bus. Therefore, the device wants to use the bus can perform certain information transfer. Further, by judging whether the above-mentioned usage of the bus is available, in case that it is impossible to use the bus, the device has an element that notifies the reason to video display device. Therefore, the device can perform appropriate set for the reservation in case of reproducing reservation.

### Brief Description of the Drawings

Fig.1 is a block diagram illustrating the electronic device system according to the preferred embodiment of the invention.
Fig.2 is a block diagram illustrating the electronic device structure (IRD) according to the preferred embodiment of the invention.
Fig.3 is a drawing illustrating an example for securing bus reservation according to the preferred embodiment of the invention.
Fig.4 is a drawing illustrating an example for securing immediate communication according to the preferred embodiment of the invention.
Fig.5 is a flow chart illustrating reservation process according to the preferred embodiment of the invention.
Fig.6 is a drawing illustrating an example of transmission data structure according to the preferred embodiment of the invention.
Fig.7 is a drawing illustrating an example of response data structure according to the preferred embodiment of the invention.
Fig.8 is a drawing illustrating an example of stored reservation data structure according to the preferred embodiment of the invention.
Fig.9 is a drawing illustrating an example of stored immediate communication data structure according to the preferred embodiment of the invention.
Fig.10 is a drawing illustrating an example of bus information data structure according to the preferred embodiment of the invention.
Fig.11 is a drawing illustrating an example of bus reservation display according to the preferred embodiment of the invention.
Fig.12 is a drawing illustrating an example of bus unavailable reservation display according to the preferred embodiment of the invention.
Fig.13 is a flow chart illustrating immediate communication process according to the preferred embodiment of the invention.
Fig.14 is a drawing illustrating an example of immediate communication display according to the preferred embodiment of the invention.
Fig.15 is a drawing illustrating an example of bus unavailable immediate communication display according to the preferred embodiment of the invention.
Fig.16 is a flow chart illustrating response process according to the preferred embodiment of the invention.
Fig.17 is a drawing illustrating an example of system including degree of priority according to the preferred embodiment of the invention.
Fig.18 is a drawing illustrating an example of degree of priority of CAM according to the preferred embodiment of the invention.
Fig.19 is a drawing illustrating an example display of degree of priority of DVD according to the preferred embodiment of the invention.
Fig.20 is a drawing illustrating an example of reservation operating display by personal computer according to the preferred embodiment of the invention.

### Best Mode (s) for Carrying out the Invention

As follows, referring to drawings, the preferred embodiment of the present invention is explained. In the preferred embodiment of the present invention, especially, that is a method of electronic devices, such as AV device and information processing device, that connected by a bus which is available for isochronous communication like IEEE 1394 bus, perform the bus reservation usage and immediate communication of isochronous communication.

The isochronous communication of IEEE 1394 is performed approximately every 8KHz (KILOHERTZ). That is secured data transmission mode of a transmission band. The data is performed by a packet transmission, the packet data consists of header part and data part, wherein the header part stores information, such as channel number and transmission data size, and the data part stores transmission data by 4 bytes. Further, in IEEE 1394, there is a data transmission mode of asynchronous what is called asynchronous communication. The asynchronous communication is mainly used for transmission of a command.

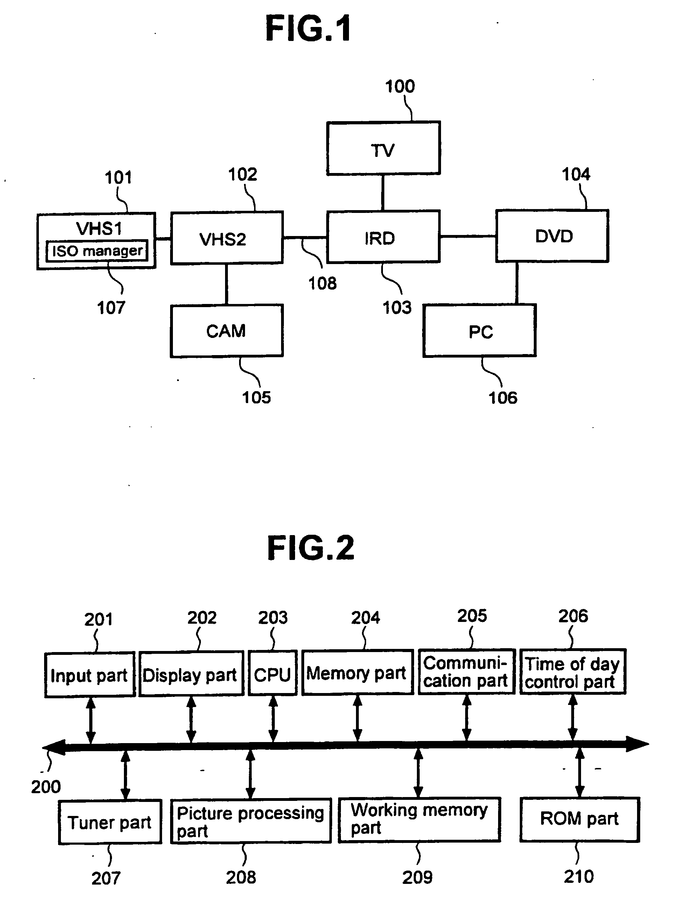

Fig.1 is a block diagram illustrating a network system according to the preferred embodiment of the invention. A TV 100 which is a television receiver, a D-VTR 101 and a D-VTR 102 those perform recording and reproducing of AV data, an IRD 103 which is a digital satellite broadcasting receiver, a digital video disk DVD 104 (hereinafter "DVD") which performs reproducing of AV data, a digital video camera CAM 105 (hereinafter "CAM") which performs recording and reproducing of AV data, and a personal computer PC 106 (hereinafter "PC") are connected by IEEE 1394 bus cable 108. In case of the isochronous communication of IEEE 1394, one of devices connected by bus is used as an isochronous manager 107 so as to manage the bus width and channels. In this embodiment, the D-VTR 101 is shown as the isochronous manager 107, however, other device, such as the DVD104 could be used for the isochronous manager.

As disclosed in Fig. 1, the configuration of the device connection is a daisy chain connection or a tree connection or those combinations. Although it is not shown in Fig. 1, there is a case that devices, such as a hard disk device, a printer, a scanner, and an audio device, are connected.

Fig.2 is a block diagram illustrating an inside structure of the IRD, which is one of electronic devices, according to the preferred embodiment of the invention. The numeral 200 is an inside bus of the IRD. The numeral 201 is an input part so as to input reservation setting data. The numeral 202 is a display part displaying required data relating to the reservation setting data. The numeral 203 is a CPU that performs whole control and process of the bus reservation of the IRD. The numeral 204 is a memory part memorizing the reservation data, and so on. The numeral 205 is communication part communicating with other devices. The numeral 206 is a time of day control part managing time of day. The numeral 207 is a tuner part receiving a broadcasting wave. The numeral 208 is a picture processing part decrypting a received picture data, and so on. The numeral 209 is a working memory part utilizing when the CPU performs such processes. The display part 202 is located not only on the body of the IRD, but also on a remote controller and connected TV 100 may be utilized.

The following cases are thought the ways of security of the communication resource of the bus.
(1) The case that the bus transmission capacity (hereinafter "bus width") of time zone in the future is secured for a bus reservation communication.
(2) The case that the bus width from the present time is secured immediately for an immediate communication.

While the case (1) shows the bus width security that is appointed the time zone, the case (2) can be thought that the bus width security without the appointed time zone from the present time.

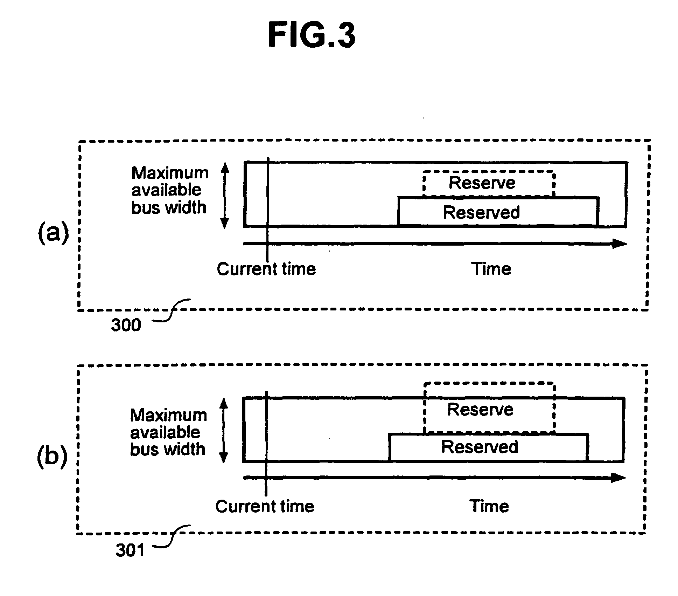

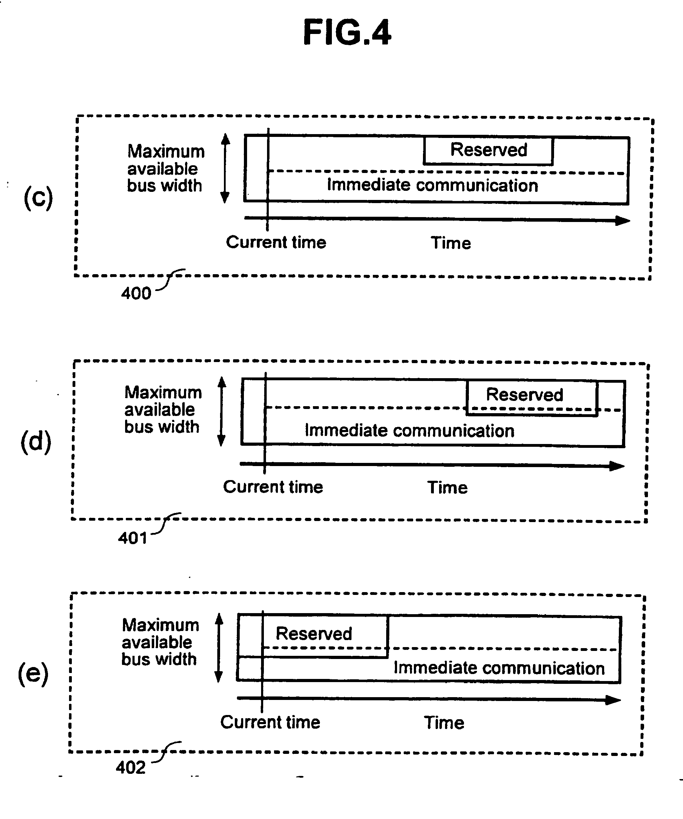

For example, in case the IRD103 wants to secure the bus width to the time zone in the future, as it is shown in Fig. 3, in addition, the following cases are thought in the case (1).
(a) The case that there is an available bus width having a margin against the bus width of the time zone that wants to be secured for reservation as numeral 300.
(b) The case that there is unavailable bus width without a margin against the bus width of the time zone that wants to be secured for reservation as numeral 301.
   For example, in case the IRD103 wants to secure the certain bus width to perform the immediate communication, as it is shown in Fig. 4, in addition, the following cases are thought in the case (2).
(c) The case that there is an available bus width having a margin for the present time and the time zone in the future against the bus width of the time zone that wants to be secured immediately as numeral 400.
(d) The case that there is an available bus width having a margin for the present time, but no margin for the time zone in the future against the bus width of the time zone that wants to be secured immediately as numeral 401.
(e) The case that there is unavailable bus width without at least a margin for the present time against the bus width of the time zone that wants to be secured immediately as numeral 402.

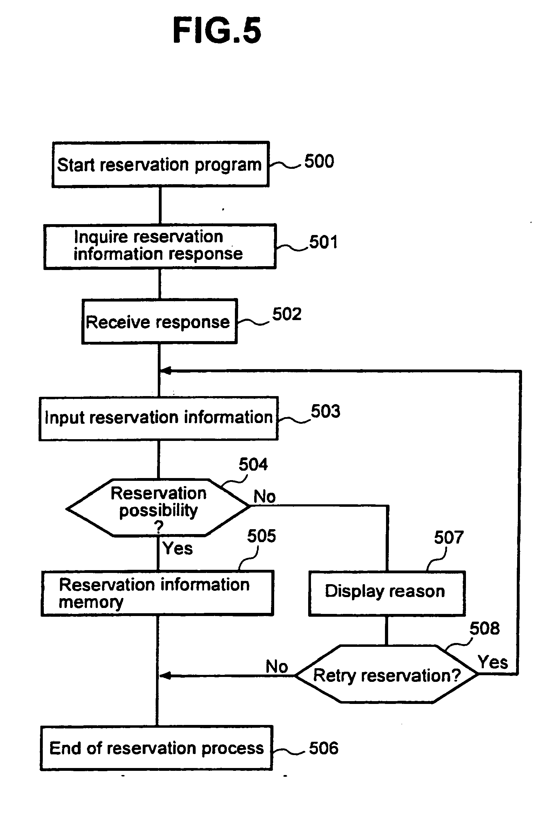

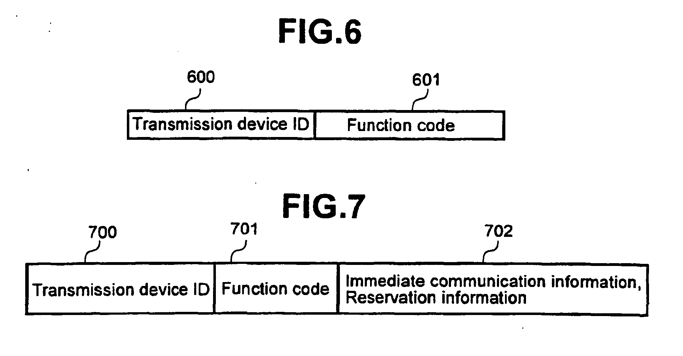

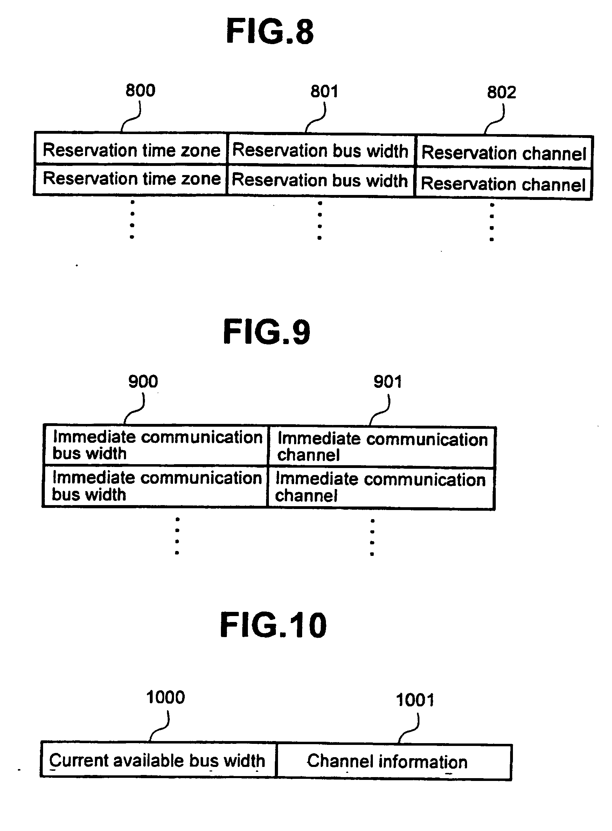

The process so as to secure the communication resource of the time in the future for the reservation in case of the case (1), is explained using the flowchart of Fig. 5, the packet structure of Fig. 6 and Fig. 7, and the storage data format of Fig. 8, Fig.9 and Fig.10.

The following is the explanation on the case (a) of Fig. 3.

In Fig. 5, in step 500, the reservation program is called when the time of starting a reservation operation. The starting the reservation operation performs the reservation processing program stored in the ROM part 210 after the CPU 203 senses a depression of a reservation starting button like the input part 201. In step 501, it inquires into the bus usage and the reservation situation. The IRD 103 performs a requirement of the answer of the immediate communication information and the reservation information to the isochronous manager 107 and the devices connected to the bus. At that time, as shown in Fig. 6, it produces a packet that consists of a function code representing a requirement of the answer, it transmits to each device connected to the bus through the communication part 205 as requirement information.

In step 502, the answer data of the immediate communication information and the reservation information of the bus, those information represent the bus usage information, is received. The answer data is received by the communication part 205, and those data are stored in the working memory part 209. For example, the communication part 205 receives a current available bus width 100 and channel information from the isochronous manager 107,as shown in Fig. 10, and the answer data of the immediate communication information and the reservation information, from the connected devices as shown in 702 of Fig. 7. In this case, for example, the content of the answer data from the isochronous manager 107 is supposed that 80MBPS of the bus are available at present. Further the answer content from the D-VTR 101 is supposed that 30 MBPS of the bus width is reserved from 18:00 on December 14 to 20:00.

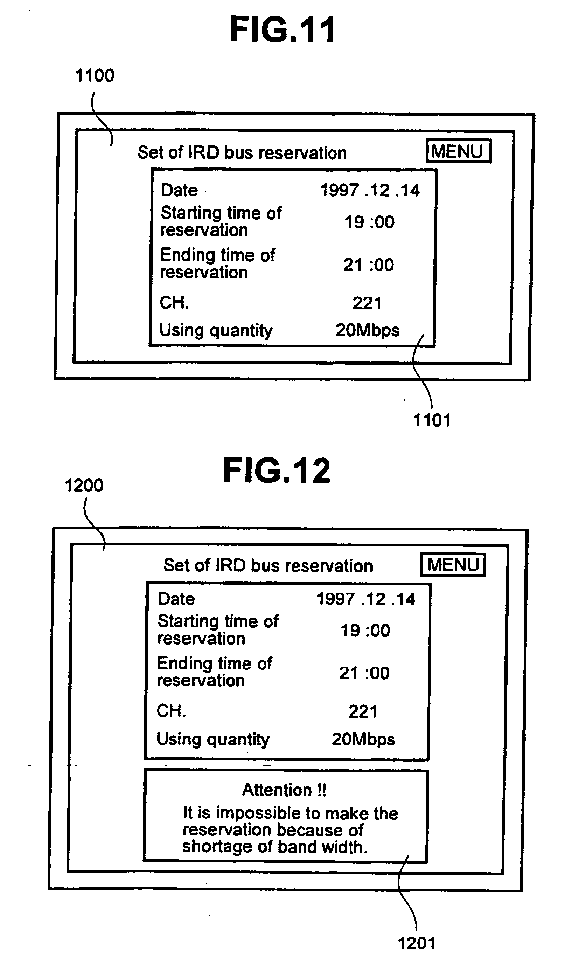

In step 503, a user inputs a usage information as desired data of the bus (hereinafter "reservation-desired data") relating to the bus usage information, such as desired time zone for reservation. The data is inputted by the input part 201, and stored in the working memory 209. For example, as shown in 1101 of Fig. 11, the user input the reservation-desired data, such as the bus width of 20MBPS (MEGA BIT PER SECOND), from 19:00 to 21:00 on December 14 in the IRD103.

In step 504, it judges the possibility of the reservation. The reservation-desired data stored in the working memory part 209, the answered immediate communication information, and the answered reservation information are compared, and judged. The CPU 203 performs the judgement. The CPU 203 is a scan process of examining whether it duplicates with a time zone that wants to be reserved is already reserved. It is possible to subtract the bus width that the reservation happened from the bus width of a maximum that is available in the time zone that duplicates and to perform the judgment by which well-known processing. It duplicates with the time zone that the D-VTR 101 is reserving in the inside of a time zone that the IRD103 wants to reserve and the interval from 19:00 to 20:00. But even if 20MBPS secured in the immediate communication is considered, the bus width that is available of a time zone with which the reservation overlapping is 50MBPS. Therefore, it judges the bus width 20MBPS that the IRD103 wants to reserve can be reserved, and advances on step 505.

In step 505, the reservation-desired data is stored as the bus usage information, and then it advances on step 506. The reservation usage information is stored to the memory part 204. Fig. 8 shows a stored data structure. A reservation time zone part 800 stores information of the reservation time zone of the reserved device. A reservation bus width part 801 stores information on the reserving bus width. A reservation channel number part 802 stores information on reserving channel number. In step 506, it is the end of the reservation process.

The following is the explanation on the case (b). The situation of the usage is the same as the above-mentioned case (1).

In step 503, a user inputs the reservation-desired data, such as desired time zone for reservation. The data is inputted by the input part 201, and stored in the working memory 209. However, in this case, if the IRD 103 makes a reservation that is more than 70MBPS (MEGA BIT PER SECOND) to the time zone from 19:00 to 21: 00 on December 14, the bus width that is the availability of the time zone will be short.

In step 504, therefore, when it judges the possibility of the time zone, after it judges that the reservation is impossible, then it will advance on step 507.

In step 507, the reason why it tells of the reservation impossibility is displayed like 1201 of Fig. 12, and it advances on step 508.

In step 508, it selects whether the reservation is retried or finished. For example, a character line represents whether the reservation retries or finishes, displays on the display part 202, then the user inputs desired process from the input part 201. The inputted information is judged by the CPU 203, it judges whether it advances on step 503 or step 506. As mentioned above, the device that tries to perform the reservation requires the reservation information from the devices connected to the bus. Then, the judgment of the possibility of the reservation is performed based upon the answer information and the information from the bus manager. Even in case the reservation cannot be performed, the reservation of the same time zone, which is reserved by other devices, is canceled by judging the user, and the reservation of the IRD103 can be made to have a priority.

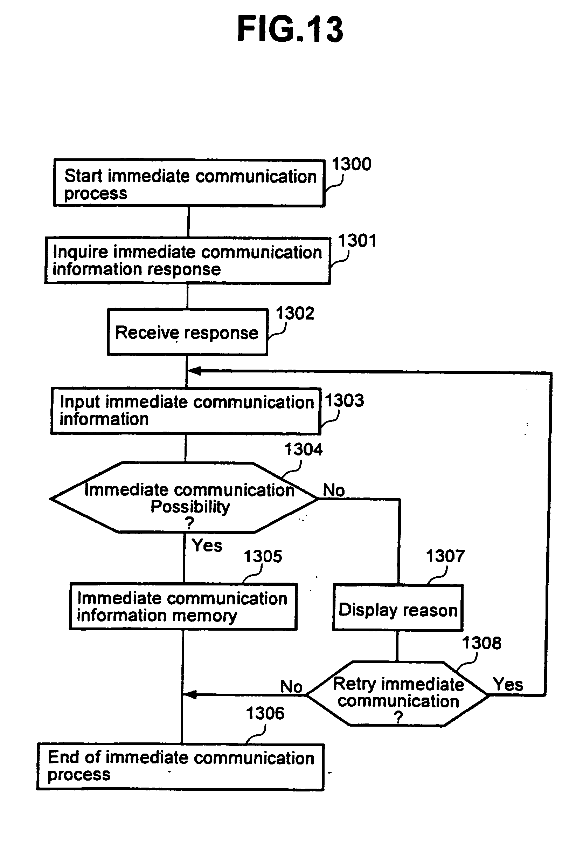

Next, the process so as to secure the communication resource from the present time in the immediate communication in case of the case (2) is explained using the flowchart of Fig. 13, the packet structure of Fig. 6 and Fig. 7, and the storage data format of Fig. 8, Fig.9 and Fig.10.

The following is the explanation on the case (c).

Step 1300 is called at the time of an operation start of immediate communication security. The starting immediate communication performs an immediate communication processing program stored in the ROM part 210 after the CPU 203 senses a depression of an immediate communication starting button like the input part 201. In step 1301, the IRD 103 performs a requirement of the answer of the immediate communication information and the reservation information to the isochronous manager 107 and the devices connected to the bus. Then, as shown in Fig. 6, it produces a packet that consists of a function code, it transmits to each device connected to the bus through the communication part 205.

In step 1302, the answer data of the immediate communication information and the reservation information is received. It is received in the communication part 205, and those data are stored in the working memory part 209. For example, the communication part 205 receives a current available bus width 100 and a channel information from the isochronous manager 107, as shown in Fig. 10, and the answer of the immediate communication information and the reservation information, from the connected devices. In this case, for example, the content of the answer data from the isochronous manager 107 is supposed that 80MBPS of the bus are available at present. Further the answer content from the D-VTR 101 is supposed that 30 MBPS of the bus width is reserved from 18:00 on December 14 to 20:00. In addition to that, the answer content from the D-VTR 104 is supposed that 20 MBPS of the bus width is using for the immediate communication.

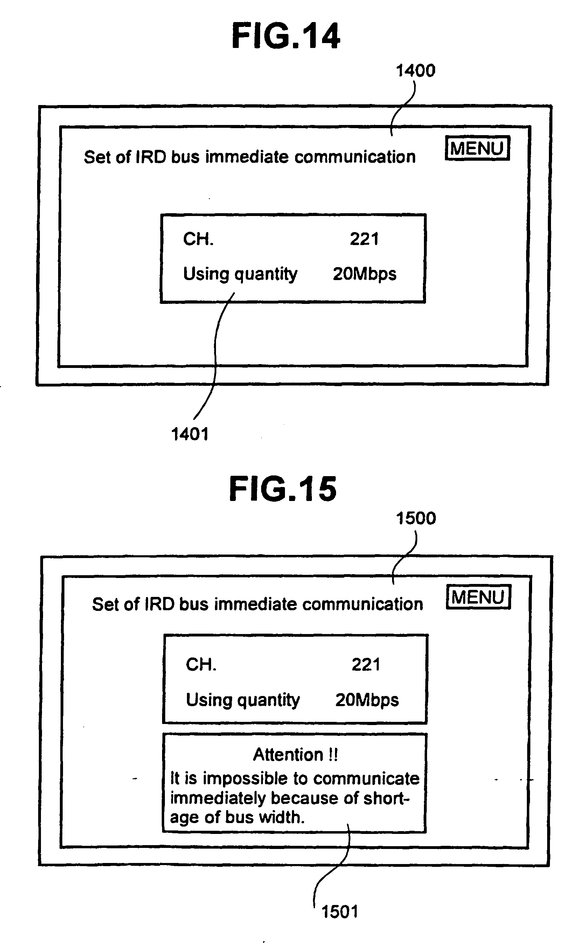

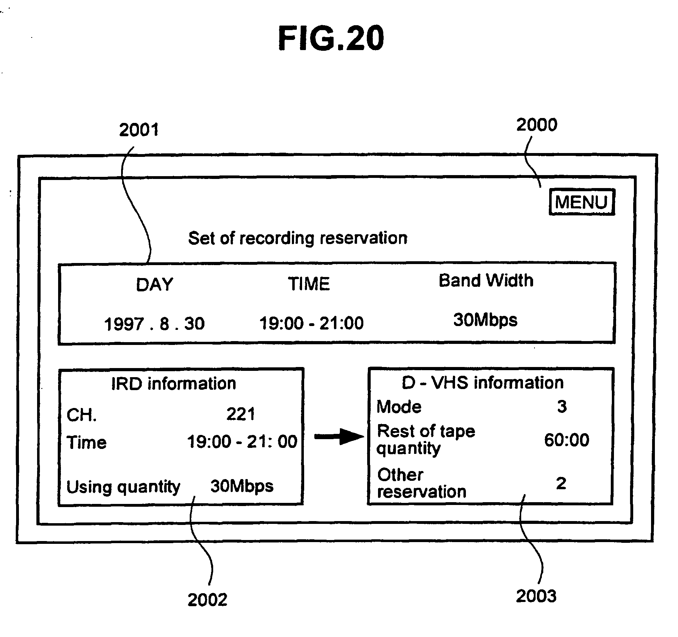

In step 1303, the bus width that is necessary for the immediate communication as immediate communication data that is desired bus usage information, is inputted and is stored in working RAM part 209. For example, as shown to 1401 of Fig. 14, 20MBPS are stored as the bus width that is necessary for the immediate communication.

In step 1304, it judges the possibility of the immediate communication. The answer data and the immediate communication data are compared, and judged. The CPU 203 performs the judgement. The CPU 203 is a scan process of examining whether it duplicates with a time zone that a time zone that wants to be reserved is already reserved. It is possible to subtract the bus width that the reservation happened from the bus width of a maximum that is available in the time zone that duplicates and to perform the judgment by which well-known processing. The bus width that can be used at present is 80MBPS, and the D-VTR is reserved in the interval from 19:00 to 20:00 in the time zone in the future. Since the available bus width in the time zone remains 50 MBPS, even if the secured 20 MBPS for the immediate communication is subtracted, it judged that 20 MBPS bus width for the immediate communication of the IRD 103 is able to secure, it advances on step 1305. In step 1305, the immediate communication information is stored to the memory part 204, and then it advances on step 1306. Fig. 9 shows a stored data structure. An immediate communication bus width part 900 is stored information on the usage bus width. An immediate communication channel part 901 is stored information on reserving channel number. In step 1306, it is the end of the immediate communication process. The immediate communication processing program, which is called, from the ROM part 210 is finished.

The following is the explanation on the case (d). The situation of the usage of the devices is the same as the above-mentioned case (c).

In step 1303, for example, 60MBPS as the bus width that is necessary for immediate communication are stored in the working RAM 209. In this case, in step 1304, because the bus width runs short in the reserved time zone of the D-VTR 101, it is judged that the bus width for the immediate communication cannot be secured, and it advances on step 1307. For example, the reason that the immediate communication cannot happen is shown like 1501 of Fig.15, and it advances on step 1308. In step 1308, it selects whether the setting of the immediate communication is retried again or ended.

In case of the case (d), if the immediate communication is changed as the reserved communication that is until the starting time of the D-VTR 101, it can be secured until 19:00.

The following is the explanation on the case (e). The situation of the usage of the devices is the same as the above-mentioned case (c).

In step 1303, it supposes that the bus width that is larger than 90MBPS as the bus width that is necessary for the immediate communication are stored in the working RAM part 209. In this case, in step 1304, it judges that the bus width fir the immediate communication cannot secure because the bus width is already short at present, and it advances on step 1307.

In step 1307, the reason why the immediately communicate cannot perform is displayed on step 1307, and it advances on step 1308. In step 1308, it selects the setting of the immediate communication is retried again or ended.

As mentioned above, the device that tries to perform the reservation requires the immediate communication information and the reservation information from the devices connected to the bus. Then, the judgment of the possibility of the reservation is performed based upon the answer information and the information from the bus manager. Even in case the immediate communication cannot be performed, the reservation of the same time zone, which is reserved by other devices, is canceled by judging the user, and the reservation of IRD103 can be made to have a priority.

In this embodiment, the possibility of the reservation is judged by step 504, however, a restriction of the band width and channel number can be thought so as to perform the immediate communication in reservation time zone easily. For example, if the band width and channel are set that only 80% of the maximum value of each bus width and channel number are possible to make the reservation using a reservation processing program stored in the ROM part 210, at least 20 % of the maximum value of each bus width and channel number can use for the immediate communication, even if the time is reservation time zone.

Further, the system which can seem to display the tackling method that is reserved if which reservation of which device is cancelled in the cases that it isn't possible to reserve. Then, to secure the bus width that runs short, it is made calculate which reservation of other devices has only to be canceled several patterns to CPU 203 in the part of reservation processing of step 504, and it is enabled by displaying the result on display part 202 and selected by the user.

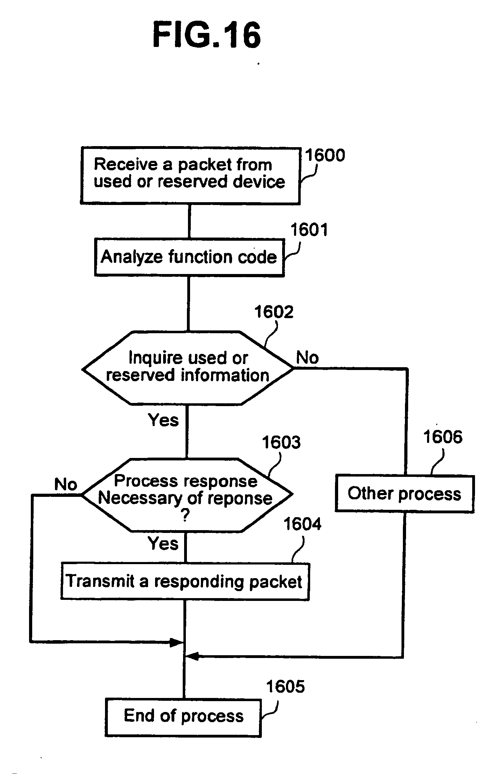

In above-mentioned embodiment, the embodiment that all devices reply to for a demand of the bus usage information is explained, but can be performed with the system which only the reservation device which is going to communicate and communicate immediately. In Fig. 16, the example of a procedure for processing the device that responds at this time is shown. In this figure, a case that other electronic devices transmitted the immediate communication information of the bus and a requirement packet of the answer of reservation information against IRD103 is explained.

In step 1600, it starts when the answer requirement packet is received. It is judged whether the communication part 205 receives the packet including the function code of the answer requirement by the CPU 203, an answer processing program stored in ROM part 210 is started. In step 1601, the function code is decoded. The CPU 203 refers the function code table in ROM 210, and the function code is interpreted. In step 1602, in case the function code is an answer requirement of usage or situation of a reservation, it advances on step 1603. In case it is the other function code, it advances on 1606.

In step 1603, the answer processing is performed. The CPU 203 refers to the memory part 204 in order to examine whether the bus is reserved or used for the immediate communication by the own device. If there are the reservation information and immediate communication information, that information is expanded to the working RAM 210 and is adjusted to answer format. If there are not the reservation information and immediate communication information, it advances on step 1605. In step 1604, an answer packet is transmitted. The answer packet adjusted to the answer format is transmitted from the communication part 205. The program is ended in step 1605. The answer-processing program in the ROM part 210 is ended. In step 1606, CPU 203 performs the processing that corresponds to the function code, and it advances on step 1605.

By this procedure, only the devices that perform the reservation and immediate communication can respond. Further, for example, IRD103 sends the time zone information that wants to be reserved to each device, only some of the devices that is reserved during the same time zone and that is using the bus at present can respond. In this case, the information of time that IRD103 wants to reserve is added in the function code 701. Further, for example, in the reservation answer processing program of the D-VTR 101, in step 1304, D-VTR 101 judges if there is a reservation during the time or there is a usage of the bus at present, and it may determine whether it sends the answer packet.

Further, a priority of the bus usage and the reservation can be set up.

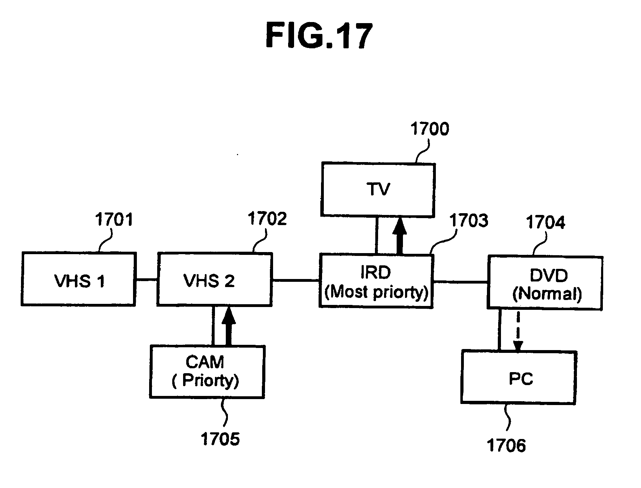

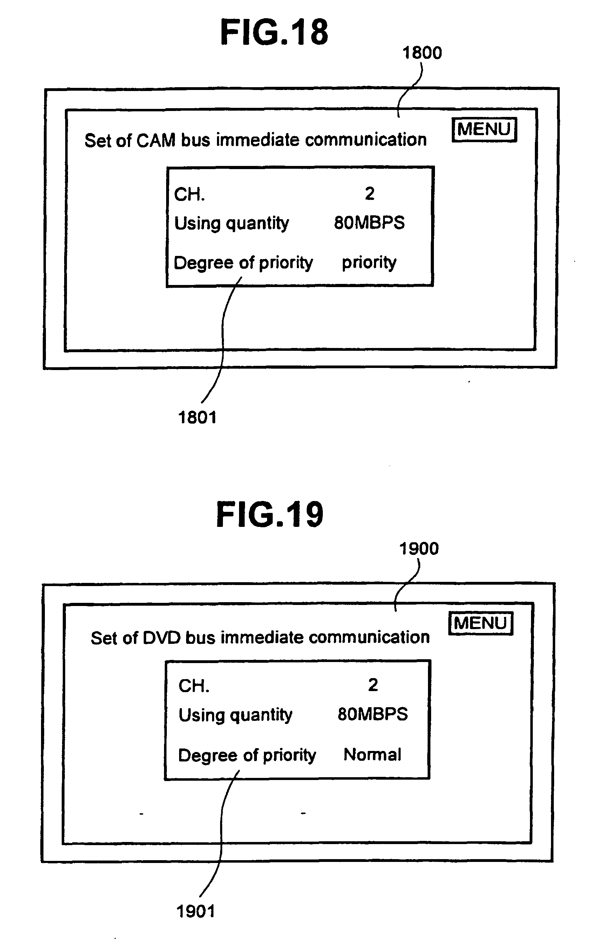

It is explained by using Fig. 17, Fig. 18 and Fig. 19. For example, sending a video of a DVD1704 into a PC 1706 and a dubbing activity is performed against a D-VTR 1702 from a CAM 1705. At this time, it tries to think a case that there is an urgent information received from a broadcasting radio wave or a network through the IRD1703 and the PC 1706, and it wants to be displayed on a TV 1700. When there is not a margin in a bus width, it has possibility of not being able to display the urgent information. At this time, like 1801 of Fig. 18, the priority of the bus usage for a video recording from the CAM 1705 to the D-VTR 1702 is set with "priority". Further, the priority of the bus usage for a soft playback from the DVD1704 to the PC 1706 is set with "normal" like 1901 of Fig. 19. Further, the priority of the bus usage for the urgent information from the IRD1703 to the TV 1700 is set with "most priority". In this case, even if the case that does not have an available bus width, the bus usage for the soft playback from the 1704 of which priority is "normal" to the PC 1706 is stopped, and the bus width that is necessary for the urgent information can be secured, and it can display the information on the TV 1700. In case that the PC1706 with the function that can control other devices is connected, while normal reservation operation is performed by each device, the reservation operation can be performed by the PC1706 collectively. In Fig. 20, the example of the operation screen by the personal computer is shown. A screen 2000 is a personal computer monitor. A bus resource that is secured with a reservation time and date of the bus to a display window 2002 is displayed. In the display window, the operation screen is displayed. Then the reservation of a program and a time is set. The operation window of D-VTR is displayed on a display window 2003. A mode of the video is set.

Further, it supposes a case that a device is plugged or unplugged in the IEEE 1394 network, and a bus reset is happened in Fig. 5. In this case, if the IRD 103 has a reservation to record a video to the D-VTR 101 from the IRD 103, the IRD is unplugged from the network, as a whole, a possibility of a reservation bus width in the network increases. A device that is using the bus or performs a reservation calls step 500 and in step 501, it inquires each devices that connected to the bus again. Because each device stores its usage or reservation information in the memory part 204, each device automatically inputs the information in step 503, and it judges the usage or reservation in step 504. If a problem does not arise, it can return to a state before the bus reset happens. However, in case of not being able to return due to some reasons, in step 507, it displays the reason why it is not able to return.

Further, in the embodiment, in step 507, a warning screen is displayed as a means for displaying the reason in case the reservation is impossible. However, the warning screen can be displayed on not only the TV monitor bus also a liquid crystal screen of a remote-controller or a operation panel of a electronic device's body or a displaying apparatus. Instead of the warning screen, a warning sound, an audio, or music is outputted to audio output device. In addition to that, a means that a user can recognize the warning using a blink of a light emitting diode can be thought.

### Industrial Applicability

As mentioned above, since this invention is able to prevent from a reservation that excesses the bus transferring capacity, the reliable communication, such as at the time of a recording reservation, can be performed. Further, in case that the reservation is impossible, the user performs appropriate operation because the reason why the reservation is impossible is displayed.
Further, there is a case that when a device tries to start an immediate communication after secured a bus, the device has a fear of not being able to use the bus at the time that other device has a reservation in the future. In case that a stage that starts the immediate communication or a foregoing stage that can not perform the communication, this invention gives a warning to the user to be taken a proper correspondence by displaying such warning.

## Claims

1. An electronic device (103) adapted to transmitting or receiving information to and from any other electronic device(100, 101, 102, 104, 105, 106) via a bus (200), comprising:
transmitting means (205) adapted to transmit information inquiring bus usage information (702) from said any other electronic device via said bus **characterised in that** the information inquiring bus usage information (702) includes
an immediate communication information securing a bus transmission capacity for the present time and
a bus transmission capacity reservation information securing a bus transmission capacity for a time zone in the future.

2. An electronic device adapted to transmitting or receiving information to and from any other electronic device via a bus, comprising:
transmitting means adapted to transmit information answering bus usage information to said any other electronic device via said bus in response to transmitted information inquiring bus usage information from said any other electronic device via said bus **characterised in that** the information answering bus usage information includes
an immediate communication information securing a bus transmission capacity for the present time and
a bus transmission capacity reservation information securing a bus transmission capacity for a time zone in the future.

3. An electronic device capable of transmitting or receiving information to and from any other electronic device via a bus according to Claim 1, further comprising:
receiving means (205) for receiving said bus usage information from said any other electronic device via said bus, when said transmitting means inquires said bus usage information.

4. An electronic device capable of transmitting or receiving information to and from any other electronic device via a bus according to Claim 3, further comprising:
judging means (203) for judging a possibility of said bus usage representing a bus desired-usage information that consists of an immediate communication information desired to be secured or a bus transmission capacity reservation information desired to be secured for a time zone in the future based upon said bus usage information received from said any other electronic device.

5. An electronic device capable of transmitting or receiving information to and from any other electronic device via a bus according to Claim 4, wherein:
said judging means judges said possibility of said bus usage from said bus desired-usage information inputted from an input means and said bus usage information received from said any other electronic device.

6. An electronic device capable of transmitting or receiving information to and from any other electronic device via a bus according to Claim 4, wherein:
said electronic device transmits own bus desired-usage information with information inquiring said bus usage information to said any other electronic device.

7. An electronic device capable of transmitting or receiving information to and from any other electronic device via a bus according to Claim 2, wherein:
said transmitting means answers a bus usage information, only when own bus usage information is overlapped with a bus desired-usage information sent from any other electronic device, when a bus desired-usage information that consists of an immediate communication information desired to be secured or a bus transmission capacity reservation information desired to be secured for a time zone in the future is sent with information inquiring a bus usage information.

8. An electronic device capable of transmitting or receiving information to and from any other electronic device via a bus according to Claim 4, further comprising:
notifying means (202) for notifying a reason, when said judging means judges that said bus usage is impossible.

9. An electronic device capable of transmitting or receiving information to and from any other electronic device via a bus according to Claim 1, wherein:
said bus usage information includes at least bus transferring capacity.

10. An electronic device capable of transmitting or receiving information to and from any other electronic device via a bus according to Claim 1, wherein:
said bus usage information includes at least starting time of bus usage, and finishing time of bus usage.

11. An electronic device capable of transmitting or receiving information to and from any other electronic device via a bus according to Claim 4, wherein:
said bus desired-usage information includes at least bus transferring capacity.

12. An electronic device capable of transmitting or receiving information to and from any other electronic device via a bus according to Claim 4, wherein:
said bus desired-usage information includes at least starting time of bus usage, and finishing time of bus usage.

13. An electronic device usage method for at least two electronic devices that are connected via a bus comprising the step of:
transmitting information inquiring bus usage information from a second electronic device via said bus from a first electronic device;
receiving said bus usage information transmitted from said second electronic device via said bus; and
judging a possibility of said bus usage based upon said bus usage information;
the usage method **characterised in that** the step of transmitting information is adapted to transmit information inquiring bus usage information including;
an immediate communication information securing a bus transmission capacity for the present time and
a bus transmission capacity reservation information securing a bus transmission capacity for a time zone in the future.

14. An electronic device usage method of Claim 13, wherein:
said electronic device transmits own bus desired-usage information that consists of an immediate communication information desired to be secured or a bus transmission capacity reservation information desired to be secured for a time zone in the future with information inquiring said bus usage information to said second electronic device,
said electronic device receives said bus usage information from second electronic device, only when said bus desired-usage information of first electronic device overlaps with said bus usage information of second electronic device,
said electronic device judges a possibility of said bus usage based upon said bus desired-usage information.

15. An electronic device usage method of Claim 14, wherein:
said electronic device judges said possibility of said bus usage from said bus desired-usage information inputted from an input means (201) and said bus usage information received from said second electronic device.

16. An electronic device usage method of Claim 14, wherein:
said electronic device notifies a reason, when said first electronic device judges that said bus usage is impossible.

17. An electronic device usage method of Claim 13, wherein:
said bus usage information includes at least bus transferring capacity.

18. An electronic device usage method of Claim 13, wherein:
said bus usage information includes at least starting times of bus usage and finishing time of bus usage.

## Patentansprüche

1. Elektronische Vorrichtung (103) zum Übertragen oder Empfangen von Informationen an und von einer anderen elektronischen Vorrichtung (100, 101, 102, 104, 105, 106) über einen Bus (200), aufweisend:
eine Übertragungseinrichtung (205) zum Übertragen von Informationen, die von der anderen elektronischen Vorrichtung Busverwendungsinformationen erfragen, über den Bus,
**dadurch gekennzeichnet, daß**
die Busverwendungsinformationen (702) erfragenden Informationen folgendes beinhalten:
eine Sofortkommunikationsinformation, die eine Busübertragungskapazität zur gegenwärtigen Zeit sicherstellt, und
eine Busübertragungskapazitäts-Reservierungsinformation, die für eine Zeitzone in der Zukunft eine Busübertragungskapazität sicherstellt.

2. Elektronische Vorrichtung zum Übertragen oder Empfangen von Informationen an und von einer anderen elektronischen Vorrichtung über einen Bus, aufweisend:
eine Übertragungseinrichtung zum Übertragen von Informationen, die der anderen elektronischen Vorrichtung mit Busverwendungsinformationen antworten, über den Bus in Reaktion auf übertragene Informationen, die Busverwendungsinformationen erfragen, von der anderen elektronischen Vorrichtung über den Bus,
**dadurch gekennzeichnet, daß**
die Busverwendungsinformationen antwortenden Informationen folgendes aufweisen:
eine Sofortkommunikationsinformation, die eine Busübertragungskapazität zur gegenwärtigen Zeit sicherstellt, und
eine Busübertragungskapazitäts-Reservierungsinformation, die für eine Zeitzone in der Zukunft eine Busübertragungskapazität sicherstellt.

3. Vorrichtung nach Anspruch 1, weiterhin aufweisend:
eine Empfangseinrichtung (205) zum Empfang der Busverwendungsinformationen von der anderen Vorrichtung über den Bus, wenn die Übertragungseinrichtung die Busverwendungsinformationen erfragt.

4. Vorrichtung nach Anspruch 3, aufweisend:
eine Beurteilungseinrichtung (203) zum Beurteilen der Möglichkeit der Busverwendung, dargestellt von Buswunschverwendungsinformationen, die aus einer Sofortkommunikationsinformation, deren Sicherstellung gewünscht wird, oder einer Busübertragungskapazitäts-Reservierungsinformation, deren Sicherstellung für eine Zeitzone in der Zukunft gewünscht wird, bestehen, aufgrund der von der anderen elektronischen Vorrichtung empfangenen Busverwendungsinformationen.

5. Vorrichtung nach Anspruch 4, wobei
die Beurteilungseinrichtung die Möglichkeit der Busverwendung aus den Buswunschverwendungsinformationen, die von einer Eingabeeinrichtung eingegeben werden, und den Busverwendungsinformationen, die von der anderen elektronischen Vorrichtung empfangen werden, heraus beurteilt.

6. Vorrichtung nach Anspruch 4, wobei die elektronische Vorrichtung an die andere elektronische Vorrichtung eigene Buswunschverwendungsinformationen zusammen mit Informationen überträgt, die eine Busverwendung erfragen.

7. Vorrichtung nach Anspruch 2, wobei
die Übertragungseinrichtung auf Busverwendungsinformationen lediglich dann antwortet, wenn sich eigene Busverwendungsinformationen mit von einer anderen elektronischen Vorrichtung ausgesandten Buswunschverwendungsinformationen überlappen, wenn Buswunschverwendungsinformationen, die aus einer Sofortkommunikationsinformation, deren Sicherstellung gewünscht wird, oder einer Busübertragungskapazitäts-Reservierungsinformation, deren Sicherstellung für eine Zeitzone in der Zukunft gewünscht wird, zusammen mit Informationen ausgesandt werden, die Busverwendungsinformationen erfragen.

8. Vorrichtung nach Anspruch 4, aufweisend:
eine Meldeeinrichtung (202) zum Melden einer Ursache, wenn die Beurteilungseinrichtung beurteilt, daß die Busverwendung unmöglich ist.

9. Vorrichtung nach Anspruch 1, wobei
die Busverwendungsinformationen mindestens eine Busübertragungskapazität beinhalten.

10. Vorrichtung nach Anspruch 1, wobei
die Busverwendungsinformationen mindestens eine Anfangszeit und eine Endzeit einer Busverwendung beinhalten.

11. Vorrichtung nach Anspruch 4, wobei
die Buswunschverwendungsinformationen mindestens eine Busübertragungskapazität beinhalten.

12. Vorrichtung nach Anspruch 4, wobei
die Buswunschverwendungsinformationen mindestens eine Anfangszeit und eine Endzeit einer Busverwendung beinhalten.

13. Verwendungsverfahren bei einer elektronischen Vorrichtung, für mindestens zwei über einen Bus verbundene elektronische Vorrichtungen, mit folgenden Schritten:
Übertragen von Informationen, die Busverwendungsinformationen von einer zweiten elektronischen Vorrichtung erfragen, über den Bus von einer ersten elektronischen Vorrichtung,
Empfangen der von der zweiten elektronischen Vorrichtung übertragenen Busverwendungsinformationen über den Bus, und
Beurteilen einer Möglichkeit der Busverwendung aufgrund der Busverwendungsinformationen,
**dadurch gekennzeichnet, daß** der Schritt zum Übertragen von Informationen eingerichtet ist, Informationen zu übertragen, die Busverwendungsinformationen erfragen, die folgendes beinhalten:
eine Sofortkommunikationsinformation, die eine Busübertragungskapazität zur gegenwärtigen Zeit sicherstellt, und
eine Busübertragungskapazitäts-Reservierungsinformation, die für eine Zeitzone in der Zukunft eine Busübertragungskapazität sicherstellt.

14. Verfahren nach Anspruch 13, wobei
die elektronische Vorrichtung an die zweite elektronische Vorrichtung zusammen mit Informationen, die die Busverwendungsinformationen erfragen, eigene Buswunschverwendungsinformationen überträgt, die aus einer Sofortkommunikationsinformation, deren Sicherstellung gewünscht wird, oder einer Busübertragungskapazitäts-Reservierungsinformation, deren Sicherstellung für eine Zeitzone in der Zukunft gewünscht wird, bestehen,
die elektronische Vorrichtung die Busverwendungsinformationen von der zweiten elektronischen Vorrichtung lediglich dann empfängt, wenn sich die Buswunschverwendungsinformationen der ersten elektronischen Vorrichtung mit den Busverwendungsinformationen der zweiten elektronischen Vorrichtung überlappen, und
die elektronische Vorrichtung die Möglichkeit zur Busverwendung aufgrund der Buswunschverwendungsinformationen beurteilt.

15. Vorrichtung nach Anspruch 14, wobei
die elektronische Vorrichtung die Möglichkeit zur Busverwendung aus den Buswunschverwendungsinformationen, die von einer Eingabeeinrichtung (201) eingegeben werden, und den Busverwendungsinformationen, die von der zweiten elektronischen Vorrichtung empfangen werden, heraus beurteilt.

16. Verfahren nach Anspruch 14, wobei
die elektronische Vorrichtung eine Ursache meldet, wenn die erste elektronische Vorrichtung beurteilt, daß die Busverwendung unmöglich ist.

17. Verfahren nach Anspruch 13, wobei
die Busverwendungsinformationen zumindest eine Busübertragungskapazität beinhalten.

18. Verfahren nach Anspruch 13, wobei
die Busverwendungsinformationen zumindest eine Anfangszeit und eine Endzeit einer Busverwendung beinhalten.

## Revendications

1. Dispositif électronique (103) adapté pour transmettre des informations à tout autre dispositif électronique (100, 101, 102, 104, 105, 106) ou recevoir des informations depuis celui-ci via un bus (200), comportant :
des moyens de transmission (205) adaptés pour transmettre des informations demandant des informations d'utilisation de bus (702) depuis ledit tout autre dispositif électronique via ledit bus, **caractérisé en ce que** les informations demandant des informations d'utilisation de bus (702) incluent
des informations de communication immédiate garantissant une capacité de transmission de bus pour l'instant présent et
des informations de réservation de capacité de transmission de bus garantissant une capacité de transmission de bus pour une zone horaire dans le futur.

2. Dispositif électronique adapté pour transmettre des informations à tout autre dispositif électronique ou recevoir des informations depuis celui-ci via un bus, comportant :
des moyens de transmission adaptés pour transmettre des informations répondant à des informations d'utilisation de bus vers ledit tout autre dispositif électronique via ledit bus en réponse à des informations transmises demandant des informations d'utilisation de bus depuis ledit tout autre dispositif électronique via ledit bus, **caractérisé en ce que**
les informations répondant à des informations d'utilisation de bus incluent
des informations de communication immédiate garantissant une capacité de transmission de bus pour l'instant présent et
des informations de réservation de capacité de transmission de bus garantissant une capacité de transmission de bus pour une zone horaire dans le futur.

3. Dispositif électronique capable de transmettre des informations à tout autre dispositif électronique ou de recevoir des informations depuis celui-ci via un bus selon la revendication 1, comportant de plus :
des moyens de réception (205) pour recevoir lesdites informations d'utilisation de bus depuis ledit tout autre dispositif électronique via ledit bus, lorsque lesdits moyens de transmission demandent lesdites informations d'utilisation de bus.

4. Dispositif électronique capable de transmettre des informations à tout autre dispositif électronique ou de recevoir des informations depuis celui-ci via un bus selon la revendication 3, comportant de plus :
des moyens de détermination (203) pour déterminer une possibilité de ladite utilisation de bus représentant des informations d'utilisation voulue de bus qui consistent à ce que des informations de communication immédiate voulues soient garanties ou que des informations de réservation de capacité de transmission de bus voulues soient garanties pour une zone horaire dans le futur sur la base desdites informations d'utilisation de bus reçues depuis ledit tout autre dispositif électronique.

5. Dispositif électronique capable de transmettre des informations à tout autre dispositif électronique ou de recevoir des informations depuis celui-ci via un bus selon la revendication 4, dans lequel :
lesdits moyens de détermination déterminent ladite possibilité de ladite utilisation de bus d'après lesdites informations d'utilisation voulue de bus entrées via des moyens d'entrée et lesdites informations d'utilisation de bus reçues dudit tout autre dispositif électronique.

6. Dispositif électronique capable de transmettre des informations à tout autre dispositif électronique ou de recevoir des informations depuis celui-ci via un bus selon la revendication 4, dans lequel :
ledit dispositif électronique transmet des informations d'utilisation voulue de bus propre avec des informations demandant lesdites informations d'utilisation de bus audit tout autre dispositif électronique.

7. Dispositif électronique capable de transmettre des informations à tout autre dispositif électronique ou de recevoir des informations depuis celui-ci via un bus selon la revendication 2, dans lequel :
lesdits moyens de transmission répondent à des informations d'utilisation de bus, seulement lorsque des informations d'utilisation de bus propre sont en chevauchement avec des informations d'utilisation voulue de bus envoyées par tout autre dispositif électronique, lorsque des informations d'utilisation voulue de bus qui consistent à ce que des informations de communication immédiate voulues soient garanties ou que des informations de réservation de capacité de transmission de bus voulues soient garanties pour une zone horaire dans le futur sont envoyées avec des informations demandant des informations d'utilisation de bus.

8. Dispositif électronique capable de transmettre des informations à tout autre dispositif électronique ou de recevoir des informations depuis celui-ci via un bus selon la revendication 4, comportant de plus :
des moyens de notification (202) pour notifier une raison, lorsque lesdits moyens de détermination déterminent que ladite utilisation de bus est impossible.

9. Dispositif électronique capable de transmettre des informations à tout autre dispositif électronique ou de recevoir des informations depuis celui-ci via un bus selon la revendication 1, dans lequel :
lesdites informations d'utilisation de bus incluent au moins une capacité de transfert de bus.

10. Dispositif électronique capable de transmettre des informations à tout autre dispositif électronique ou de recevoir des informations depuis celui-ci via un bus selon la revendication 1, dans lequel :
lesdites informations d'utilisation de bus incluent au moins l'heure de début d'utilisation de bus, et l'heure de fin d'utilisation de bus.

11. Dispositif électronique capable de transmettre des informations à tout autre dispositif électronique ou de recevoir des informations depuis celui-ci via un bus selon la revendication 4, dans lequel :
lesdites informations d'utilisation voulue de bus incluent au moins une capacité de transfert de bus.

12. Dispositif électronique capable de transmettre des informations à tout autre dispositif électronique ou de recevoir des informations depuis celui-ci via un bus selon la revendication 4, dans lequel :
lesdites informations d'utilisation voulue de bus incluent au moins l'heure de début d'utilisation de bus, et l'heure de fin d'utilisation de bus.

13. Procédé d'utilisation de dispositif électronique pour au moins deux dispositifs électroniques qui sont connectés via un bus, comportant les étapes consistant à :
transmettre des informations demandant des informations d'utilisation de bus d'un second dispositif électronique via ledit bus depuis un premier dispositif électronique,
recevoir lesdites informations d'utilisation de bus transmises par ledit second dispositif électronique via ledit bus, et
déterminer une possibilité de ladite utilisation de bus sur la base desdites informations d'utilisation de bus,
le procédé d'utilisation étant **caractérisé en ce que** l'étape de transmission d'informations est adaptée pour transmettre des informations demandant des informations d'utilisation de bus incluant :
des informations de communication immédiate garantissant une capacité de transmission de bus pour l'instant présent, et
des informations de réservation de capacité de transmission de bus garantissant une capacité de transmission de bus pour une zone horaire dans le futur.

14. Procédé d'utilisation de dispositif électronique selon la revendication 13, dans lequel :
ledit dispositif électronique transmet des informations d'utilisation voulue de bus propre qui consistent à ce que des informations de communication immédiate voulues soient garanties ou des informations de réservation de capacité de transmission de bus voulues soient garanties pour une zone horaire dans le futur avec des informations demandant lesdites informations d'utilisation de bus audit second dispositif électronique,
ledit dispositif électronique reçoit lesdites informations d'utilisation de bus depuis le second dispositif électronique, seulement lorsque lesdites informations d'utilisation voulue de bus du premier dispositif électronique sont en chevauchement avec lesdites informations d'utilisation de bus du second dispositif électronique,
ledit dispositif électronique détermine une possibilité de ladite utilisation de bus sur la base desdites informations d'utilisation voulue de bus.

15. Procédé d'utilisation de dispositif électronique selon la revendication 14, dans lequel :
ledit dispositif électronique détermine ladite possibilité de ladite utilisation de bus d'après lesdites informations d'utilisation voulue de bus entrées via des moyens d'entrée (201) et lesdites informations d'utilisation de bus reçues dudit second dispositif électronique.

16. Procédé d'utilisation de dispositif électronique selon la revendication 14, dans lequel :
ledit dispositif électronique notifie une raison, lorsque ledit premier dispositif électronique détermine que ladite utilisation de bus est impossible.

17. Procédé d'utilisation de dispositif électronique selon la revendication 13, dans lequel :
lesdites informations d'utilisation de bus incluent au moins une capacité de transfert de bus.

18. Procédé d'utilisation de dispositif électronique selon la revendication 13, dans lequel :
lesdites informations d'utilisation de bus incluent au moins l'heure de début d'utilisation de bus et l'heure de fin d'utilisation de bus.
